# EUROPEAN PATENT SPECIFICATION

(11) **EP 1 707 498 B1**
(45) Date of publication and mention of the grant of the patent: **23.07.2008**
(21) Application number: 06005249.5
(22) Date of filing: 15.03.2006
(51) Int. Cl.: B65D 81/26, B29C 44/34

(54) **Process and system for manufacturing a vessel made of foamed material for packaging foodstuff**
System und Verfahren zur Herstellung eines Behälters aus geschäumtem Material zum Verpacken von Nahrungsmitteln
Système et procédé pour la fabrication d'un récipient en matériau expansé pour emballer des produits alimentaires

(30) Priority: 29.03.2005 IT TO20050205
(43) Date of publication of application: 04.10.2006
(73) Proprietor: MAGIC PACK S.R.L., 26030 Gadesco Pieve Delmona (CR) (IT)
(72) Inventor: Biasio, Florio c/o Magic Pack S.r.l., 26030 Gadesco Pieve Delmona (CR) (IT); Bernini, Fabrizio c/o Magic Pack S.r.l., 26030 Gadesco Pieve Delmona (CR) (IT)
(74) Representative: Garavelli, Paolo

(56) References cited:
- EP-A- 1 506 927
- EP-A- 1 640 407
- WO-A-00/69750
- US-A- 3 610 509
- US-A- 6 103 163
- US-A1- 2004 185 152

## Description

The present invention refers to a process and a system for manufacturing a vessel made of foamed material for packaging foodstuff, in particular for containing foodstuff having the trend of emitting excess liquids.

The problem of packaging foodstuffs which secrete liquids, such as for example meat or fish, has been dealt with for 40 years from now, with different types of solutions, which are more or less functional. Currently, in order to package the above foodstuffs, a very widespread system is using a containing vessel made of foamed material wound by a film of extensible plastic. In this type of packaging, liquid emitted from foodstuff is a big problem, both for operators in foodstuff industry and supermarkets, and for end customers, since the excessive presence of liquids in a vessel drastically reduces the product life, in addition obviously to strongly impair its visual impact. The excess liquid, moreover, migrates on the whole tray and on the extensible film used for its packaging, thereby creating further handling and transport problems. Since they further are disposable vessels, characterised by high rotation volumes, the vessel cost becomes fundamental, which will have to be the lowest possible, or at least in percentage in proportion to the packaged foodstuff value.

Currently, some types of vessels are known which are able to absorb liquids; herein below the most meaningful solutions have been briefly described.

A solution realised in the prior art by joining by means of a coupler with hot air blowers, two closed cell polystyrene foils with inside bands of absorbing material made of paper or non-woven fabric and following drawing: however, the use of different material which are mutually mixed for manufacturing the tray creates serious problems upon recycling the vessel itself. Moreover, the capacity of absorbing is linked to the size of the absorbing band which, in many cases, is able to absorb the whole liquid released by foodstuff, especially as regards red meats. Since the two vessel sides has next to the absorbent section a separation between upper and lower foils, if such vessel is slanted or if the amount of liquid is greater than the capacity of the absorbing band the liquid goes out of the vessel itself.

Another solution is known in the art, realised by making the foil of open cell foam polystyrene with a foil of polystyrene on the upper side of the foil made of open cell foam polystyrene and a film, always made of polystyrene, on its lower side, and subjecting the foils to a following drawing. It is however necessary to remind that the foil made of open cell foam polystyrene has a low mechanical resistance and is very easily broken or squashed; consequently, high thicknesses are necessary in order to have enough resistance and resiliency, but also in this case a slight pressure on the surface, especially on corners, generates an irreversible deformation of the vessel. The films on the two surfaces contribute to make the vessel sturdier but not always they radically solve the problem. Also as regards the visual barrier to absorbed liquids, there are several problems: in fact, in many cases, the above liquids leave a highly visible alone, even if the surface films, with covering substances as additive, rather reduce its vision. Moreover, the extrusion plant and process for manufacturing such trays are particularly complex and difficult to manage. The re-circulation of scraps is instead very costly: in fact, the waste open cell material, in this case, cannot be mixed with the traditional closed cell material and must therefore be stored and re-densified separately, with further increase of costs. US 2004/185152 A1 and US-A-6 103 163 disclose vessels for packaging products and processes for manufacturing them US2004/185152A discloses a system according to the preamble of claim 2.

Finally, in the prior art a solution is known which is obtained by coupling two foils made of closet cell foam polystyrene, with inside a foil of open cell polystyrene and following drawing. The three foils are couplet by using a jet of hot air around 350° - 450° which melts the two external foils on their surface; during the passage through the slit in rolling cylinders, the melt material is joined to the layer of open cell polystyrene by compression; during this working step, however, the cellular foil structure, in particular the open cell structure, is subjected to a high squashing which unavoidably reduces its absorption capability. The hot air coupling operation is per se a critical process which cannot be easily managed, since a non-optimum air temperature can bring about, if too low, a scarce adhesion of the three layers with the chance thereby to detach them, or, if too high, to a melting of external layers, with consequent loss of its absorption capability. The risk of fire is further high, since the two foils made of open and closed cell foam polystyrene contain part of the gas used for expansion, which, as known, is highly flammable, above all if subjected to strong heating like in this case. For manufacturing the foil made of open cell foam polystyrene during extrusion, polymers different from polystyrene which cannot be mixed with this latter one are added to basic raw materials; in this case, however, the extrusion process is less stable and can be managed with much difficulty. Also during drawing, if the forming device with die and counter-die is not suitably shaped, the action of pressing the counter-die on the foil generates a further squashing of layers, in particular of the internal open cell layer, such action further reducing its absorption capability.

Object of the present invention is solving the above prior art problems by providing a vessel for packaging foodstuff made of foamed material which, being in compliance with standards in force for foodstuff contact suitability, is able to guarantee the absorption of liquids emitted by foodstuff container therein from three to five times its weight, in addition to guaranteeing that the absorbed liquid is kept therein not allowing its release, in particular when the vessel is handled or put in a vertical or slanted position.

A further object of the present invention is providing a vessel for packaging foodstuff made of foamed material which is enough sturdy to support, without breaking or being excessively deformed, stresses during the packaging step, above all in automated lines, and moreover is manufactured with a single material and therefore is easily able to be recycled.

A further object of the present invention is providing a vessel for packaging foodstuff made of foamed material which is able to provide an enough visual barrier to the serum emitted by foodstuff contained therein, particularly red meats.

A further object of the present invention is providing a vessel with a weight which is as an average lower but with mechanical and functional characteristics equal to or greater than those realised with previously described techniques, de facto obtaining a meaningful reduction of raw materials and therefore of the environmental impact.

Finally, another object of the present invention is providing a process for manufacturing such vessel for packaging foodstuff made of foamed material which is able to allow its production economically, directly obtaining in extrusion a single-layer foil with composite structure, ready for drawing, without further coupling workings, in order to guarantee for the end product a competitive sales price and a sufficient operating margin.

The above and other objects and advantages of the present invention are reached with a process and a system for manufacturing a vessel for packaging foodstuff made of foamed material, as respectively described in claims 1 and 2. Preferred embodiments and non-trivial variations of the present invention are the subject matter of the dependent claims.

The present invention will be better described by some preferred embodiments thereof, provided as a non limiting example, with reference to the enclosed drawings, in which:
- FIG. 1 is a top perspective view of an embodiment of the vessel made of foamed material for packaging foodstuff of the present invention;
- FIG. 2 is a sectional view along the dashed line A-A shown in FIG. 1 of the vessel made of foamed material for packaging foodstuff according to the present invention;
- FIG. 3 shows an enlarged sectional view of the part shown in the dashed box Q in FIG. 2 of the vessel made of foamed material for packaging foodstuff according to the present invention;

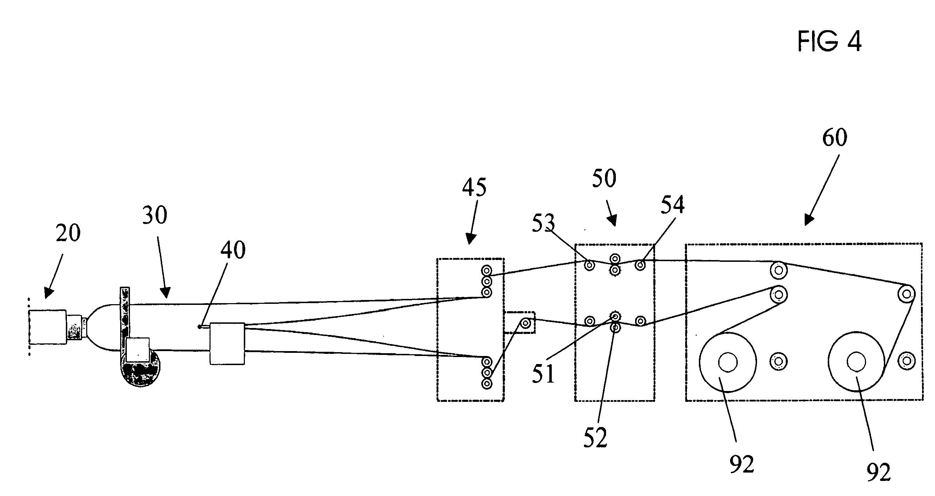

- FIG. 4 shows the manufacturing line of the single-layer composite foamed material and the drilling device for manufacturing the vessel of the invention by drawing;
- FIG. 5 shows the part of the internal cooling system to the calibrator responsible for forming the layer of the foil of the inventive vessel.

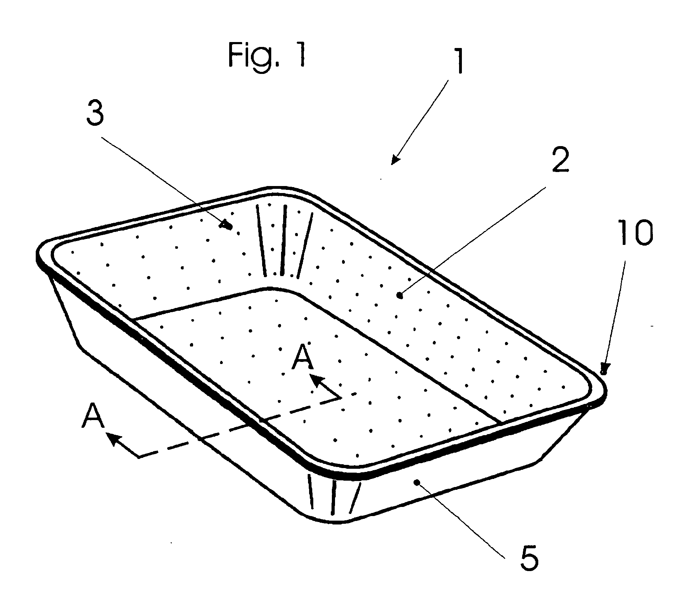

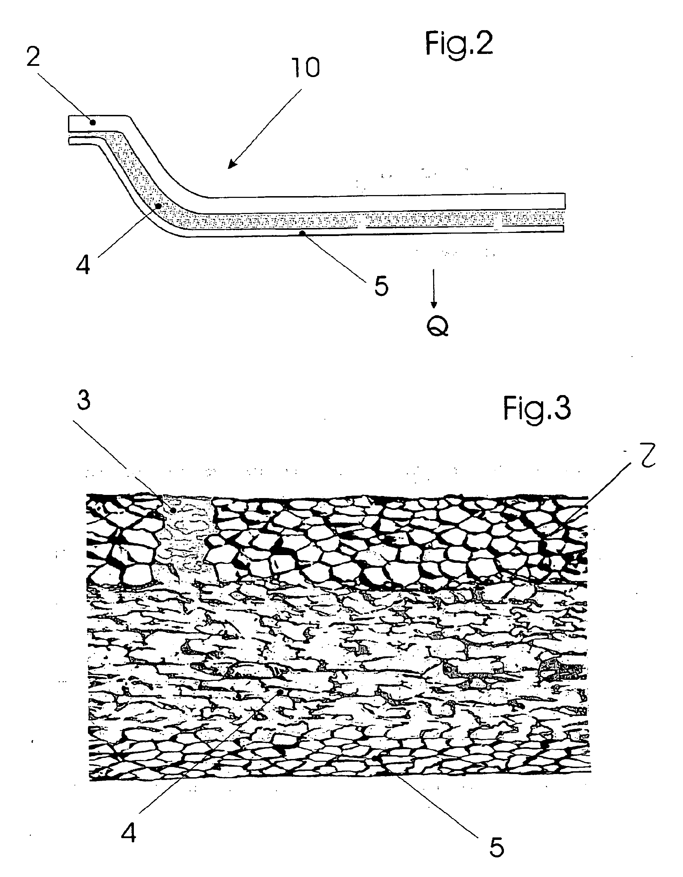

With reference to FIG. 1 and 2, it can be noted that a vessel 1 made of foamed material for packaging foodstuff, which is able to absorb the excess liquids emitted by foodstuff container therein, is composed of a foil with composite structure 10 formed of different cellular structures. The upper part 2, aimed to get in contact with the foodstuff, is composed of closed cell foam polystyrene, the intermediate absorbing part 4 is composed of open cell foam polystyrene, and the underlying part 5 is again composed of closed cell foam polystyrene.

The surface layer 2 is further equipped with a plurality of holes 3. Such particular arrangement allows the liquid emitted from foodstuff container in the vessel 1 to flow through the upper layer 2 due to the holes 3 and to be absorbed by the absorbing layer 4 due to its won open cell structure.

The lower closed cell part 5 of the foil with composite structure 10, in addition to performing a role of carrier structure for the vessel 1, is a barrier which cannot be overcome for liquids and an optimum visual screen which drastically reduces the view of serum accumulated in the absorbing layer 4.

The particular structure with external closed cells and internal open cells allows to obtain, due to the unique layers 2, 4 and 5, a sturdy vessel and able to resist to following filming processes (not shown).

The present invention therefore allows obtaining several results:
1) the absorption of liquids emitted by foodstuff contained in the vessel 1;
2) the optical separation of the absorbing layer 4 aimed to absorb liquids;
3) the stiffening of the vessel 1;
4) a better resistance to local material squashing.

With the present invention therefore, by using a single composite single-layer foil 10 resulting from a single extrusion process (not shown), the effect and behaviour are obtained of a couplet foil of the prior art where the upper and lower parts are made of closed cell foam polystyrene and the intermediate (absorbing) part is made of open cell foam polystyrene, to obtain which, however, with the prior art, two different extrusion processes were necessary (one for manufacturing the closed cell layer, the other for realising the open cell layer) associated with a coupling process for joining two layers.

The above described vessel 1 is instead realised through a manufacturing process which comprises the steps of:
- producing, through extruding means 20, forming means 30 and cutting means 40, a band of material for the foil 10;
- dragging the foil 10, possibly through dragging means 45;
- drilling the surface layer 2 of the band of material for the foil 10 through drilling means 50;
- winding the foil 10 through winding means 60; and
- thermoforming, through drawing means (not shown) the vessels 1 from the foil 10.

The cutting means 40 are preferably composed of two counter-facing cutting blades.

The drilling means 50 are composed of at least one (and preferably two) pair of cylinders, of which one is a needle-type drilling cylinder 51 and the other one is a counter-cylinder 52, with suitable upstream and downstream sliding cylinders 53, 54. Purpose of the drilled holes 3 is penetrating into the surface layer 2 to allow liquids emitted from foodstuff contained in the vessel 1 to reach the absorbing layer 4.

In particular, the step of realising a band of material for the foil 10 with composite structure of open and closed cell polystyrene provides that a mixture having, for 100 parts by weight, the following composition:
- 0% to 15% of regenerated polystyrene from a foil made of composite foam polystyrene;
- 0.8% to 1.8% of a talc-based nucleating agent;
- 1% to 4% of an anti-static agent;
- 3% to 6% of a mixture of butane, isobutane and propane gases; and
- the remaining percentage of first-use polystyrene, is melted in a single-screw extruder 20 of a tandem-type at a temperature of about 220°C; after having reached the melting, a swelling agent is injected in the liquid mass, preferably from 3% to 6% of a mixture of butane, isobutane and propane gases; afterwards, the fluid is passed through the secondary extruder which, always with a suitable mixing, starts a gradual cooling till its end part.

The cooling of external surfaces of the foil 10 occurs through an external air cooling ring 64', 64", an internal air cooling ring 66, a cooling air pressure control ring 68, and a fan 70 for the forced cooling air flow.

In this step, the material gone out of the extruder 20 body through the head 62, which has a circular shape, completely expands: the thereby-obtained tubular member made of foamed material 72 has a diameter from 15 to 20 cm; afterwards, the tubular member made of foamed material 72 is placed on a suitable calibrating cylinder 74 with adequate sizes, thanks to which it is possible to confer it the desired diameter.

The calibrator 74 internally comprises a pipe 76 which allows aligning the calibrator 74 with the extruder 62 head, in addition to the transport of air to the internal cooling ring 66. Pipes 78, 80 are further provided for letting air go out of the calibrator 74, with related outlet air fine-regulating valves 82, 83, in turn equipped with respective adjusting hand levers 84, 85. The pipes 78, 80 are further terminated with valves 86, 87 for opening and closing the outlet air, while pipe 76 is supplied by a compressor 90 with a suitable control 91 of air pressure in cooling ring.

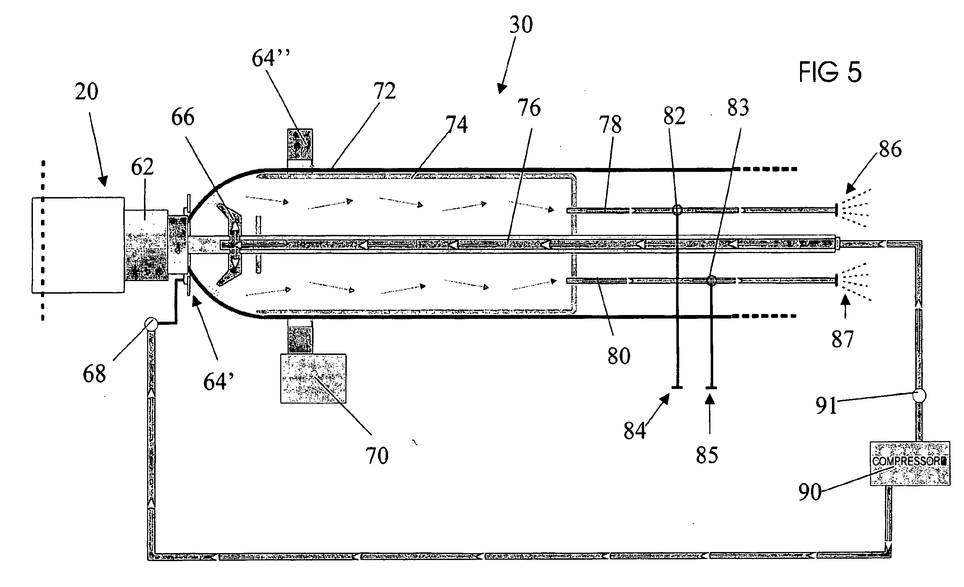

As shown in Fig. 5, inside the aligning pipe for calibrator 74 - extruder head 62, air generated by the compressor is pushed towards the internal cooling ring. Air going out of the ring cools down the surface part of the foil 10 and is responsible for forming the layer 2. Due to the effect of initial pressure and tubular member 72 walls, air, after having performed its cooling action, returns back and is collected by pipes 78, 80 for letting air go out of the calibrator 74; the outlet flow is adjusted by suitable valves 82, 83 placed on pipes 78, 80. As regards forming the layer 5, the responsible devices are the external air cooling ring 64' supplied by the compressor 90 with the flow control valve 68 and related manometer, and then an external air cooling ring supplied by the flow generating fan 70.

For forming the surface layer 2, the material is immediately cooled on its lower part through the above described cooling system placed at the extruder head outlet, inside the calibrator 74 and, for forming the surface layer 5, through the air ring (described above) with wider sizes placed around the calibrator 74. The forced cooling system inside the calibrator 74 is able to convey, always inside, great amounts of cold air which are able to form the closed cell surface layer, such air having to go out of suitable openings in the calibrator 74. By suitably adjusting the amount of air, the amount of closed surface cells can be partly determined and therefore the surface layer 2 thickness.

The composite single-layer foil 10 obtained in open and closed cell foam polystyrene will have, at the end of this step, a thickness included between 1 and 4 mm and a density included between 50 and 150 kg/m³.

At the end of the calibrator 74, two blades (not shown) are laterally placed, which take care of sectioning the tubular member 72 made of foamed material: from this point on, the extruded material assumes the shape of two foils. These latter ones are taken from a roller-type towing system (which could also not be present), which takes care of pulling the material, which is drilled with drilling means 50, and started towards the winding means 60, which will transform the two foils into circular coils 92.

The step of thermo-forming the vessels 1 from the double-band foil 10 through the drawing means provides that such drawing means comprise a multiple-impression die and related counter-dies. During the thermo-forming step, namely the closure of the die and its counter-die, after softening the foil coupled due to heating effect, vacuum is produced inside the die and by vacuum the single-layer foil 10 with composite structure adheres to the die walls, assuming its final shape. The counter-die height and shape must be such as to perfectly seal the die for creating vacuum inside it.

In view of what has been described above, the production simplification deriving from the manufacturing process according to the present invention appears evident. The extrusion process for realising the foil 10, differently from what has been proposed by the prior art, does not provide for the addition of polymers foreign to the polystyrene for opening the cells, but only for the use of suitable process temperatures and pressures. Moreover, through a suitable management of these latter ones, it is possible to obtain, in the foil 10, a suitable combination between open and closed cells, depending on necessary absorption capacity and on required resistance degree for the foil 10. The foil 10 keeps its thickness, and therefore its absorption power, almost unchanged.

Moreover, it is possible to re-use composite structure foam polystyrene scraps, after their redensification, for producing a new foam polystyrene foil 10 made of closed cell foam polystyrene, this resulting impossible in case of addition of polymers foreign to polystyrene, as taught by the prior art, at least for producing foils made of closed cell foam polystyrene.

Finally, the plastic deformation action by vacuum is in this case made easier with respect to the prior art, since it must operate on a single-layer foil 10 and not on a three-layered foil as in known processes, all as an advantage for quality of vessel 1 and production efficiency. The counter-dies used in the present invention, therefore, contribute to the correct forming of vessels 1, without however squashing the foil 10, thereby keeping its absorption capability almost unchanged.

## Claims

1. Process for manufacturing a vessel (1) for packaging foodstuff formed of a foil made of composite single-layer foamed material (1), said foil (10) being made of:
- a lower supporting part (5) made of closed cell foam polystyrene;
- an upper part (2) made of closed cell foam polystyrene, aimed to get in contact with a foodstuff contained in said vessel (1); and
- an absorbing layer (4) having an open cell structure, said absorbing layer being placed between said lower part (5) and said upper part (2);
- said upper part (2) being equipped with a plurality of holes (3) adapted to allow a liquid emitted from said foodstuff to penetrate into said surface layer (2) and to be absorbed by said absorbing layer (4),
said process comprising the steps of:
a) producing a band of material for said composite single-layer foil (10), by using extruding means (20), forming means (30) and cutting means (40), said cutting means (40) comprising a calibrator (74) with internal forced air cooling equipped with a cooling air ring and at least two counter-facing blades placed on sides of said calibrator (74), said step of producing said band of material for said foil (10) comprising the sub-steps of:
a1) heating and melting a mixture comprising, for 100 part in weight, 10% to 15% of regenerated polystyrene from foil made of open cell foam polystyrene, 0.8% to 1.8% of a talc-based nucleating agent, 1% to 4% of an anti-static agent and the remaining percentage of first-use polystyrene, in said single-screw extruder of a tandem type at a temperature ranging from 215°C to 225°C;
a2) adding to said melted mixture preferably 3% to 6% of a mixture of butane, isobutane and propane gases;
a3) cooling said mixture without an external thermal intervention;
a4) making said mixture go out of a die plate of said extruding means (20);
a5) expanding said mixture forming a tubular member (72) made of foamed material whose diameter is included between 15 and 20 cm;
a6) cooling said tubular member (72) through said air ring placed at an outlet of the head (62) of said extruding means (20);
a7) placing said tubular member (72) on said calibrator (74);
a8) cooling said tubular member (72) through said cooling air ring (64) of said calibrator (74) and through said forced air cooling system (66) inside said calibrator (74);
a9) cutting said tubular member (72) through said blades laterally placed to said calibrator (74) forming two of said bands for said upper foil (2); and
a10) winding said bands for said upper foil (2) through said roller system which supplies said band for said upper foil (2) to said winding machine (60) forming circular coils (92);
b) dragging the foil (10), possibly through dragging means (45);
c) drilling the surface layer (2) of the band of material for the foil (10) through drilling means (50);
d) winding the foil (10) through winding means (60); and
e) thermo-forming, through drawing means, the vessels (1) from the foil (10), said step of thermo-forming comprising the sub-steps of:
e1) heating the single-layer foil (10);
e2) inserting said heated composite single-layer foil (10) into said die and closing said related counter-die;
e3) creating vacuum inside said die closed by said counter-die; and
e4) opening said die and extracting said vessel (1).

2. System for manufacturing a vessel (1) for packaging foodstuff formed of a foil made of composite single-layer foamed material (1), said foil (10) being made of:
- a lower supporting part (5) made of closed cell foam polystyrene;
- an upper part (2) made of closed cell foam polystyrene, aimed to get in contact with a foodstuff contained in said vessel (1); and
- an absorbing layer (4) having an open cell structure, said absorbing layer being placed between said lower part (5) and said upper part (2);
- said upper part (2) being equipped with a plurality of holes (3) adapted to allow a liquid emitted from said foodstuff to penetrate into said surface layer (2) and to be absorbed by said absorbing layer (4); said system comprising:
a) extruding means (20) of a band of material for the foil (10);
b) forming means (30) of the band of material for the foil (10);
c) cutting means (40) of the band of material for the foil (10);
d) possible dragging means (45) for the foil (10);
e) drilling means (50) of the surface layer (2) of the band of material for the foil (10);
f) winding means (60) of the foil (10); and
g) drawing means adapted to thermo-form the vessels (1) from the foil (10)
**characterised in that** said cutting means (40) for making a band of material for said upper foil (2) comprise a calibrator (74) with internal forced air cooling equipped with a cooling air ring and at least two counter-facing blades placed on sides of said calibrator (74).

3. System according to claim 2, **characterised in that** said extruding means (20) comprise an extruder, preferably of a tandem type, equipped with an air ring (64) placed at an outlet of an extruder head (62).

4. System according to claim 2, **characterised in that** said winding means (60) comprise a winding machine and a system of rollers (92).

5. System according to claim 2, **characterised in that** said cutting means (40) for making a band of material for said lower foil (4) comprise a water-cooled calibrator (74) equipped with a cooling air ring (66) and at least two blades placed on sides of said calibrator (74).

6. System according to claim 2, **characterised in that** said drilling means (50) comprise at least one needle-type cylinder (51) and a related counter-cylinder (52).

7. System according to claim 2, **characterised in that** said drawing means comprise a die comprising a plurality of impressions and a related counter-die.

8. System according to claim 2, **characterised in that** said band for double-layered foil (10) is provided as supply from said extruding means (20) to said thermo-forming means through a system with rollers.

9. System according to claim 2, **characterised in that** cooling of external surfaces of said foil (10) occurs through an external air cooling ring (64', 64'').

## Patentansprüche

1. Verfahren für die Produktion eines Behälters (1) zur Verpackung von Nahrungsmitteln, der aus einer einschichtigen Schaumfolie aus Verbundmaterial (1) hergestellt wird, die genannte Folie (10) setzt sich folgendermaßen zusammen:
- ein unterer tragender Teil (5) aus Polystyrolschaum mit geschlossenen Zellen;
- ein oberer Teil (2) aus Polystyrolschaum mit geschlossenen Zellen, der dazu bestimmt ist, mit einem Nahrungsmittel in Kontakt zu treten, das in dem genannten Behälter (1) enthalten ist; und
- eine Absorptionsschicht (4), die eine Struktur mit offenen Zellen hat, die genannte Absorptionsschicht befindet sich zwischen dem genannten unteren Teil (5) und dem genannten oberen Teil (2);
- Der genannte obere Teil (2) ist mit mehreren Löchern (3) ausgestattet, die es einer aus den genannten Nahrungsmitteln heraustretenden Flüssigkeit ermöglichen, die genannte Oberflächenschicht (2) zu durchdringen und von der genannten Absorptionsschicht (4) absorbiert zu werden.
Das genannte Verfahren schließt folgende Phasen ein:
a) Herstellung eines Materialbandes aus Extrusions- (20), Form- (30) und Schnittvorrichtungen (40) für die genannte einschichtige Verbundfolie (10), die genannten Schnittvorrichtungen (40) enthalten einen Kalibrierdorn (74) mit forcierter Innenkühlung, der mit einem Kühlluftring und mindestens zwei entgegen gesetzten Sägeblättern ausgestattet ist, die an den Seiten des genannten Kalibrierdorns (74) angebracht sind, die genannte Herstellungsphase des genannten Materialbandes für die genannte Folie (10) schließt folgende Unterphasen ein:
a1) Erhitzung und Schmelzung einer Mischung in der genannten Tandem-Einschneckenpresse mit einer Temperatur zwischen 215°C und 225°C, die bei 100 Gewichtsteilen von 10% bis 15% aus regeneriertem Polystyrol aus einer offenzelligen Polystyrolschaumfolie, von 0,8% bis 1,8% aus einem Keimbildner auf Talkumbasis, von 1% bis 4% aus einem Antistatikum und einem verbleibenden Prozentanteil aus Polystyren erster Anwendung besteht;
a2) Zusatz in der genannten Schmelzmischung einer Mischung vorzugsweise von 3% bis 6% aus Butan-, Isobutan- und Propangas;
a3) Kühlung der genannten Mischung ohne externen Wärmeeinschritt;
a4) Austritt der genannten Mischung aus der Matrize der genannten Extrusionsvorrichtungen (20);
a5) Verbreitung der genannten Mischung, indem diese einen Schlauch (72) aus Schaummaterial mit einem Durchmesser zwischen 15 und 20 cm bildet;
a6) Kühlung des genannten Schlauches (72) durch den Kühlluftring, der am Ausgang des Kopfes (62) der genannten Extrusionsvorrichtungen (20) positioniert ist;
a7) Positionierung des genannten Schlauches (72) am genannten Kalibrierdorn (74);
a8) Kühlung des genannten Schlauches (72) durch den genannten (64) Kühlluftring des genannten Kalibrierdorns (74) und durch das genannte, im genannten Kalibrierdorn (74) forcierte Luftkühlsystem (66);
a9) Schnitt des genannten Schlauches (72) durch die genannten Sägeblätter, die seitlich am genannten Kalibrierdorn (74) positioniert sind und die zwei genannten Bänder für die genannte obere Folie (2) bilden; und
a10) Umwicklung der genannten Bänder für die genannte obere Folie (2) mit dem genannten Walzensystem, das das genannte Band für die genannte obere Folie (2) zum genannten Aufroller (60) führt, der kreisförmige Spulen (92) bildet;
b) Die Folie (10) ggf. mit Zugvorrichtungen (45) ziehen;
c) Die Oberflächenschicht (2) des Materialbandes für die Folie (10) mit Lochungsvorrichtungen (50) lochen;
d) Die Folie (10) mit den Aufrollvorrichtungen (60) umwickeln; und
e) Thermoformen der Behälter (1) aus der Folie (10) mit Zugvorrichtungen, die genannte Thermoformphase schließt folgende Unterphasen ein:
e1) Erhitzung der einschichtigen Folie (10);
e2) Einführung der genannten erhitzten einschichtigen Verbundfolie (10) in das genannte Gesenk und Schließen des genannten entsprechenden Gegengesenks;
e3) Erzeugung eines Vakuums durch das genannte Gegengesenk im genannten geschlossenen Gesenk; und
e4) Öffnung des genannten Gesenks und Auszug des genannten Behälters (1).

2. System für die Produktion eines Behälters (1) zur Verpackung von Nahrungsmitteln, der aus einer einschichtigen Schaumfolie aus Verbundmaterial (1) hergestellt wird, die genannte Folie (10) setzt sich folgendermaßen zusammen:
- ein unterer tragender Teil (5) aus Polystyrolschaum mit geschlossenen Zellen;
- ein oberer Teil (2) aus Polystyrolschaum mit geschlossenen Zellen, der dazu bestimmt ist, mit einem Nahrungsmittel in Kontakt zu treten, das in dem genannten Behälter (1) enthalten ist; und
- einer Absorptionsschicht (4), die eine Struktur mit offenen Zellen hat, die genannte Absorptionsschicht befindet sich zwischen dem genannten unteren Teil (5) und dem genannten oberen Teil (2);
- der genannte obere Teil (2) ist mit mehreren Löchern (3) ausgestattet, die es einer aus den genannten Nahrungsmitteln heraustretenden Flüssigkeit ermöglichen, die genannte Oberflächenschicht (2) zu durchdringen und von der genannten Absorptionsschicht (4) absorbiert zu werden. Das genannte System schließt ein:
a) Extrusionsvorrichtungen (20) eines Materialbandes für die Folie (10);
b) Lochungsvorrichtungen (30) des Materialbandes für die Folie (10);
c) Schnittvorrichtungen (40) des Materialbandes für die Folie (10);
d) Eventuelle Zugvorrichtungen (45) für die Folie (10);
e) Lochungsvorrichtungen (50) der Oberflächenschicht (2) des Materialbandes für die Folie (10);
f) Aufrollvorrichtungen (60) der Folie (10); und
g) Zugvorrichtungen, die zum Thermoformen der Behälter (1) aus der Folie (10) dienen,
und ist **dadurch gekennzeichnet, dass** die genannten Schnittvorrichtungen (40) zur Realisierung eines Materialbandes für die genannte obere Folie (2) einen Kalibrierdorn (74) mit interner forcierter Luftkühlung einschließen, der mit einem Kühlluftring und mindestens zwei entgegen gesetzten Sägeblättern ausgerüstet ist, die an den Seiten des genannten Kalibrierdorns (74) angebracht sind.

3. System gemäß Patentanspruch 2, das **dadurch gekennzeichnet ist, dass** die genannten Extrusionsvorrichtungen (20) eine Presse einschließen, vorzugsweise eine Tandem-Presse, die mit einem Luftring (64) ausgestattet ist, der am Ausgang eines Spritzkopfes (62) positioniert ist.

4. System gemäß Patentanspruch 2, das **dadurch gekennzeichnet ist, dass** die genannten Aufrollvorrichtungen (60) einen Aufroller und ein Walzensystem (92) einschließen.

5. System gemäß Patentanspruch 2, das **dadurch gekennzeichnet ist, dass** die genannten Schnittvorrichtungen (40) zur Realisierung eines Materialbandes für die genannte obere Folie (4) einen Kalibrierdorn (74) mit Wasserkühlung einschließen, der mit einem Kühlluftring (66) und mindestens zwei entgegen gesetzten Sägeblättern ausgerüstet ist, die an den Seiten des genannten Kalibrierdorns (74) angebracht sind.

6. System gemäß Patentanspruch 2, das **dadurch gekennzeichnet ist, dass** die genannten Lochungsvorrichtungen (50) mindestens eine Nadelwalze (51) und eine entsprechende Gegenwalze (52) einschließen.

7. System gemäß Patentanspruch 2, das **dadurch gekennzeichnet ist, dass** die genannten Zugvorrichtungen ein Gesenk einschließen, das mehrere Formräume und ein entsprechendes Gegengesenk enthält.

8. System gemäß Patentanspruch 2, das **dadurch gekennzeichnet ist, dass** das genannte Band für doppelschichtige Folien (10) mit einem Walzensystem durch die genannten Extrusionsvorrichtungen (20) an die genannten Thermoformvorrichtungen geführt wird.

9. System gemäß Patentanspruch 2, das **dadurch gekennzeichnet ist, dass** die Kühlung der externen Oberflächen der genannten Folien (10) durch einen externen Kühlluftring (64', 64") erfolgt.

## Revendications

1. Procédé pour la production d'un conteneur (1) pour le conditionnement d'aliments, exécuté dans une tôle mince d'un matériel expansé composite monocouche (1), ladite tôle (10) étant formée:
- d'une partie inférieure de support (5) en polystyrène expansé à cellules closes;
- d'une partie supérieure (2) en polystyrène expansé à cellules closes, destinée à entrer en contact avec un aliment contenu dans ledit conteneur (1); et
- d'une couche absorbante (4) possédant une structure à cellules ouvertes, ladite couche absorbante étant placée entre ladite partie inférieure (5) et ladite partie supérieure (2);
- ladite partie supérieure (2) étant pourvue d'une pluralité d'orifices (3) capables de permettre à un liquide secrété par lesdits aliments de pénétrer dans ladite couche de surface (2) pour y être absorbé par ladite couche absorbante (4),
ledit procédé comprenant les étapes suivantes:
a) produire, par l'intermédiaire de moyens d'extrusion (20), des moyens de formage (30) et des moyens de coupe (40), un ruban de matériel pour ladite tôle mince composite monocouche (10), lesdits moyens de coupe (40) comprenant un calibreur (74) à refroidissement interne à air pulsé muni d'une bague à air de refroidissement et au moins deux lames opposées placées de part et d'autre dudit calibreur (74), ladite étape de production dudit ruban de matériel pour ladite tôle mince (10) comprenant les sub-étapes suivantes:
a1) chauffage et fusion d'un mélange comprenant, pour 100 parts en poids, de 10% à 15% de polystyrène régénéré d'une tôle mince en polystyrène expansé à cellules ouvertes, du 0,8% à 1,8% d'un agent 'nucléant' à base de talc, du 1% à 4% d'un agent antistatique et le pourcentage résidu de polystyrène de première utilisation, dans ladite extrudeuse monovis du type tandem sous une température comprise entre 215°C et 225°C;
a2) ajout, dans ledit mélange fondu, de préférence de 3% à 6% d'un mélange de gaz butane, isobutane et propane;
a3) refroidissement de ce mélange sans intervention thermique extérieure;
a4) écoulement du mélange hors de la filière desdits moyens d'extrusion (20);
a5) expansion dudit mélange formant un boudin (72) de matière expansée avec un diamètre compris entre 15 et 20 cm;
a6) refroidissement dudit boudin (72) au moyen de ladite bague à air positionnée à la sortie de la tête (62) desdits moyens d'extrusion (20);
a7) positionnement de ce boudin (72) sur ledit calibreur (74);
a8) refroidissement dudit boudin (72) au moyen de ladite bague (64) à air de refroidissement dudit calibreur (74) et au moyen dudit système (66) de refroidissement à air pulsé à l'intérieur dudit calibreur (74);
a9) coupe dudit boudin (72) avec des lames positionnées de part et d'autre dudit calibreur (74) pour former deux rubans pour ladite tôle mince supérieure (2); et
a10) enroulement des rubans pour ladite tôle mince supérieure (2) à travers ledit système de rouleaux qui alimente ledit ruban pour ladite tôle mince supérieure (2) à cet enrouleur (60) pour former des bobines circulaires (92);
b) entraînement de la tôle mince (10), éventuellement avec des moyens d'entraînements (45);
c) perçage de la couche de surface (2) du ruban de matériel pour la tôle mince (10) avec des moyens de perçage (50);
d) enroulage de la tôle mince (10) avec des moyens enrouleurs (60); et
e) formage à chaud, avec des moyens d'emboutissages, des conteneurs (1) à partir de la tôle mince (10), ladite phase de formage à chaud comprenant les subphases suivantes:
e1) chauffage de la tôle mince monocouche (10);
e2) insertion de ladite tôle mince composite monocouche (10) chauffée dans ledit moule et fermeture du contre moule correspondant;
e3) création de vide à l'intérieur du moule fermé par ledit contre moule; et
e4) ouverture dudit moule et extraction du conteneur (1).

2. Système pour la production d'un conteneur (1) pour le conditionnement d'aliments, exécuté dans une tôle mince d'un matériel expansé composite monocouche (1), ladite tôle (10) étant formée:
- d'une partie inférieure de support (5) en polystyrène expansé à cellules closes;
- d'une partie supérieure (2) en polystyrène expansé à cellules closes, destinée à entrer en contact avec un aliment contenu dans ledit conteneur (1); et
- d'une couche absorbante (4) possédant une structure à cellules ouvertes, ladite couche absorbante étant placée entre ladite partie inférieure (5) et ladite partie supérieure (2);
- ladite partie supérieure (2) étant pourvue d'une pluralité d'orifices (3) capables de permettre à un liquide secrété par lesdits aliments de pénétrer dans ladite couche de surface (2) pour y être absorbé par ladite couche absorbante (4); ledit système comprenant:
a) des moyens d'extrusion (20) d'un ruban de matériel pour la tôle mince (10);
b) des moyens de formage (30) du ruban de matériel pour la tôle mince (10);
c) des moyens de coupe (40) du ruban de matériel pour la tôle mince (10);
d) d'éventuels moyens d'entraînement (45) de la tôle mince (10);
e) des moyens de perçage (50) de la couche de surface (2) du ruban de matériel pour la tôle mince (10);
f) des moyens enrouleurs (60) de la tôle mince (10); et
g) des moyens d'emboutissage capables de former à chaud les conteneurs (1) à partir de la tôle mince (10),
**caractérisé en ce que** lesdits moyens de coupe (40) pour réaliser un ruban de matériel pour ladite tôle mince supérieure (2) comprennent un calibreur (74) avec refroidissement à air pulsé interne muni d'une bague à air de refroidissement et au moins deux lames opposées placées de part et d'autre dudit calibreur (74).

3. Système selon la revendication 2, **caractérisé en ce que** lesdits moyens d'extrusion (20) comprennent une extrudeuse, si possible du type tandem, pourvue d'une bague à air (64) positionnée à la sortie d'une tête de l'extrudeuse (62).

4. Système selon la revendication 2, **caractérisé en ce que** lesdits moyens enrouleurs (60) comprennent un enrouleur et un système à rouleaux (92).

5. Système selon la revendication 2, **caractérisé en ce que** lesdits moyens de coupe (40) pour réaliser un ruban de matériel pour ladite tôle mince supérieure (4) comprennent un calibreur (74) avec refroidissement à air pulsé interne muni d'une bague à air de refroidissement (66) et au moins deux lames opposées placées de part et d'autre dudit calibreur (74).

6. Système selon la revendication 2, **caractérisé en ce que** lesdits moyens de perçage (50) comprennent au moins un cylindre à aiguilles (51) et un contre cylindre correspondant (52).

7. Système selon la revendication 2, **caractérisé en ce que** lesdits moyens d'emboutissage comprennent un moule comprenant une pluralité d'empreintes et un contre moule correspondant.

8. Système selon la revendication 2, **caractérisé en ce que** ledit ruban à double couche (10) est fourni en alimentation desdits moyens d'extrusion (20) auxdits moyens de perçage à chaud à travers un système à rouleaux.

9. Système selon la revendication 2, **caractérisé en ce que** le refroidissement des surfaces extérieures de ladite tôle mince (10) s'effectue au moyen d'une bague de refroidissement à air extérieur (64', 64").
